(19) **Europäisches Patentamt European Patent Office Office européen des brevets**

(11) **EP 1 682 385 B1**

(12) **EUROPEAN PATENT SPECIFICATION**

(45) Date of publication and mention
of the grant of the patent:
**15.10.2008 Bulletin 2008/42**

(51) Int Cl.:
***B60R 13/08*** (2006.01)

(21) Application number: **04818322.2**

(86) International application number:
**PCT/US2004/035911**

(22) Date of filing: **29.10.2004**

(87) International publication number:
**WO 2005/044630 (19.05.2005 Gazette 2005/20)**

(54) **SOUND INSULATING SYSTEM**

SCHALLDÄMPFUNGSSYSTEM

SYSTEME D'ISOLATION PHONIQUE

(84) Designated Contracting States:
**AT BE BG CH CY CZ DE DK EE ES FI FR GB GR
HU IE IT LI LU MC NL PL PT RO SE SI SK TR**

(30) Priority: **31.10.2003 US 516539 P**

(43) Date of publication of application:
**26.07.2006 Bulletin 2006/30**

(73) Proprietor: **DOW GLOBAL TECHNOLOGIES INC.
Midland MI 48674 (US)**

(72) Inventors:
• **SIAVOSHAI, Saeed, J.
Bloomfield Hills, MI 48304-1201 (US)**
• **DUBENSKY, Ellen
Flushing, MI 48433 (US)**
• **OWEN, Eric, G.
Marne, MI 49435 (US)**
• **TUDOR, Jay
Goodrich, MI 48438 (US)**
• **TAO, Xiaodong
Troy, MI 48083 (US)**
• **BLANDON, Joann
Sarnia, Ontario N0N 1C0 (CA)**
• **BRUNE, Douglas, A.
Midland, MI 48642 (US)**

(74) Representative: **Raynor, John et al
Beck Greener
Fulwood House,
12 Fulwood Place,
London WC1V 6HR (GB)**

(56) References cited:
**EP-A- 0 363 130          US-A- 5 266 143
US-A- 5 554 830          US-A- 6 145 617
US-B1- 6 296 075**

**Description**

CROSS-REFERENCE TO RELATED APPLICATION

This application claims the benefit of U.S. Provisional Application No. 60/516,539, filed October 31, 2003. The disclosure of the above application is incorporated herein by reference.

FIELD OF THE INVENTION

The present invention relates generally to a sound insulating system.

BACKGROUND OF THE INVENTION

Automotive makers have endeavored to reduce the overall noise and vibration in vehicles. Limiting noise and vibration as well as harshness (NVH) has become an important consideration in vehicle designs. Previously, engine noise typically dominated the overall vehicle noise. More recently, other noise sources, such as from tires, wind and exhaust have become as important to reduce as engine noise. Exterior pass-by noise has been regulated by governmental restrictions. Yet, interior vehicle noise constriction has been a direct result of consumer demands to reduce the noise in the vehicle.

It is desirable to minimize the overall interior and exterior vehicle noise. Accordingly, significant efforts have been directed to reduction of interior vehicle noise. One of these efforts has been to use a barrier concept or a dashmat. These dashmats are used to reduce noise from the engine to the interior of the vehicle. Typically such dashmats are placed on or adjacent a substrate, such as a firewall to reduce the amount of noise passing from the engine through the firewall to the vehicle interior.

Prior dashmats are typically made of a decoupler, usually made of foam (slab or cast foam) and a barrier made of thermoplastic polyolefin (TPO) or ethylene vinyl acetate sheet (EVA). These dashmats are all intended to reduce overall engine compartment noise. Such barrier type dashmats have typically been relatively heavy to produce the desired noise reduction results.

More recently, lightweight dashmats have been used. The lightweight concept utilizes absorptive material, such as shoddy cotton. Rather than blocking the engine noise, the goal of this type of dashmat is to absorb and dissipate the engine noise as it travels from the engine compartment to the vehicle interior. One such lightweight dashmat system is shown in United States Patent No. 6,145,617 to Alts and assigned to Rieter Automotive AG. Another type of lightweight dashmat system is shown in United States Patent No. 6,296,075 to Gish et al and assigned to Lear Corporation. These lightweight dashmat systems also decrease the overall weight of the vehicle.

Yet another type of dashmat system is shown in Japanese Application numbers 2000-209070 and 2000-209059 and European Paten Application publication No. EP 1,428,656 A1. These applications show soundproofing materials which include absorptive materials and a barrier material.

The primary function of these types of dashmats is to reduce noise levels in the vehicle's interior. Traditionally, it was believed that blocking the noise in accordance with the mass law provides the best noise transmission loss and noise reduction. Transmission loss and noise reductions are typical measurement parameters used to quantify the noise reduction.

Blocking the noise is only effective if the barrier covers all holes and pass throughs. If not, leaks can occur and NVH performance is degraded. Since dashmats are used in various areas of the vehicle having openings or pass throughs, such as in the areas of air conditioners or steering columns, the blocking technique is not wholly effective. Typically, in certain dashmats using the blocking technique, the insulation foam (i.e., the decoupler) has been less effective and does not possess good absorptive acoustic properties. Thus, the noise is not dissipated enough as it travels through the dashmat.

It would be desirable to provide lightweight dashmats that treat both engine compartment noise coming through the firewall and noise that comes into the passenger compartment from other sources during vehicle operation. In addition, it would be desirable to have a dashmat system that is tunable or adjustable for any particular vehicle application.

SUMMARY OF THE INVENTION

According to one embodiment of the present invention, there is provided a sound insulating system comprising:

a first sound absorbing layer having a thickness of between 0 and 100mm;
a substantially impermeable barrier layer adjacent said first absorbing layer, the barrier layer having a thickness between 0.1 and 50mm; and

a second sound absorbing layer adjacent said barrier layer, the second sound absorbing layer having a thickness of between 0 and 100mm,

wherein the first absorbing layer comprises foam or a fibrous layer, the second absorbing layer comprises foam or a fibrous layer and the barrier layer comprises a sheet of acrylonitrile-butadiene-styrene, high impact polystyrene, polyethylene terephthalate, polyethylene, polypropylene, ethylene vinyl acetate, polyvinyl acetate, polyvinyl chloride or an olefin, wherein the surface weight of said barrier layer is greater than 0.1kg/m$^2$ and wherein the bending stiffness of said system is between from 0.18 N/mm to 45 N/mm.

BRIEF DESCRIPTION OF THE DRAWINGS

The present invention will become more fully understood from the detailed description and the accompanying drawings, wherein:

Figure 1 is a cross-sectional view of one embodiment of the present invention;
Figure 2 is a cross-sectional view of an alternate embodiment of the present invention;
Figure 3 is a cross-sectional view of another alternate embodiment of the present invention;
Figure 4 is a cross-sectional view of another alternate embodiment of the present invention;
Figure 5 is a cross-sectional view of another alternate embodiment of the present invention;
Figure 6 is a cross-sectional view of another alternate embodiment of the present invention;
Figure 7 is a cross-sectional view of another alternate embodiment of the present invention;
Figure 8 is a cross-sectional view of another alternate embodiment of the present invention;
Figure 9 is a cross-sectional view of another alternate embodiment of the present invention;
Figure 10 is a graph showing noise reduction results;
Figure 11 is a graph showing noise reduction results;
Figure 12 is a graph showing noise reduction results;
Figure 13 is a graph showing test results;
Figure 14 is a table depicting surface weights;
Figure 15 is a graph showing noise reduction test results;
Figure 16 is a graph showing insertion loss test results;
Figure 17 is a graph showing insertion loss;
Figure 18 is a graph showing damping test results;
Figure 19 is a graph showing damping test results;
Figure 20 is a graph showing insertion loss test results; and
Figure 21 is a graph showing damping test results.

DETAILED DESCRIPTION OF THE PREFERRED EMBODIMENTS

The following description of the preferred embodiment(s) is merely exemplary in nature and is in no way intended to limit the invention, its application, or uses.

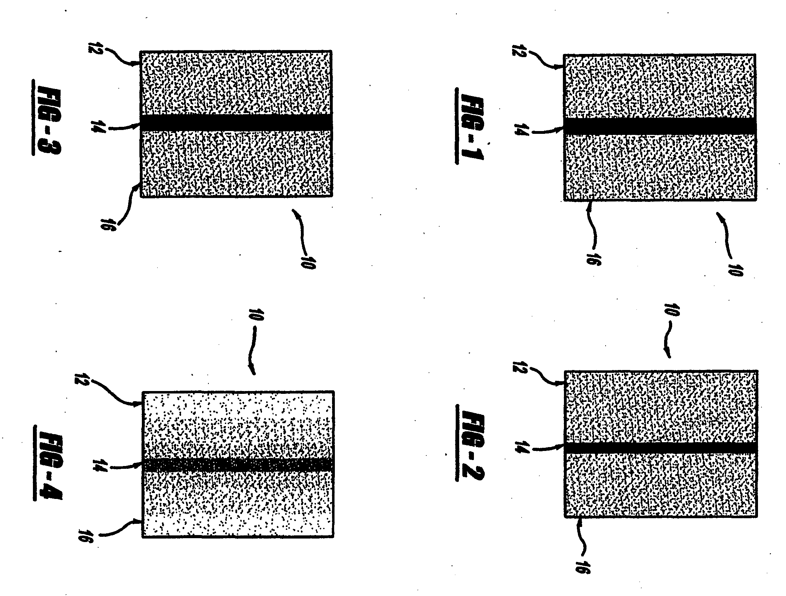

Figure 1 is a cross-sectional view of one embodiment of the present invention. As shown in Figure 1, there is a sound insulating system, generally shown at 10. The sound insulating system 10 comprises a multi-layer system. The sound insulating system 10 generally comprises a first sound absorbing layer generally indicated at 12. A barrier layer generally indicated at 14 is adjacent the first absorbing layer 12. A second sound absorbing layer generally indicated at 16 is adjacent the barrier layer 14. As shown, the first 12 and second 16 absorbing layers are disposed on opposite sides of the barrier layer 14. As used herein the absorbing layers 12, 16 are sometimes referred to as A layers. Similarly, the barrier layer 14 is sometimes referred to as a B layer. The overall system may be referred to as an ABA system.

The system 10 shown provides a multi-layer dashmat that is preferably used to reduce noise transmission to the interior of the vehicle through the front-of-dash panel. In addition to the noise blocking feature, the system 10 reduces noise levels within the vehicle interior through sound absorption. Additionally, the system 10 preferably can be used in the engine compartment to reduce noise exiting the engine compartment to the exterior of the vehicle. The system 10 also preferably enhances the sound quality perception for interior and/or exterior environments. The system 10 can also be incorporated into other automotive components such as, but not limited to, liners for wheel wells, fenders, engine compartments, door panels, roofs, floor body treatments, trunks and packaging shelves. Furthermore, the system 10 can be incorporated into non-automotive applications.

In the Figure 1 embodiment, the first and second absorbing layers 12, 16 each comprise a foam layer. The foam layer preferably is a viscoelastic foam. The foam can comprise any natural or synthetic foam, both slab and molded. The foams can be open or closed cell or combinations thereof. The foam can comprise latex foam, polyolefin, polyurethane, polystyrene or polyester. The foam may also comprise recycled foam, foam impregnated fiber mats or micro-cellular elastomer foam. Additionally, the foam may include organic and/or inorganic fillers. Furthermore, additional additives may be incorporated into the foam composition, such as, but not limited to, flame retardants, anti-fogging agents, ultraviolet absorbers, thermal stabilizers, pigments, colorants, odor control agents, and the like.

The barrier layer 14 preferably comprises a relatively thin substantially impermeable layer. In the embodiment of Figure 1, the barrier layer 14 preferably comprises sheets of acrylonitrile-butadiene-styrene, high-impact polystyrene (HIPS), polyethylene terephthalate (PET), polyethylene, polypropylene, ethylene vinyl acetate, polyvinyl acetate (PVA), polyvinyl chloride (PVC), olefins including thermoplastic olefins (TPO) and the like. The barrier layer 14 may also include natural or synthetic fibers for imparting strength. The barrier layer 14 is also preferably shape formable and retainable to conform to the substrate for any particular application. Additionally, the barrier may include organic and/or inorganic filters. Furthermore, additional additives may be incorporated into the barrier composition, such as but not limited to flame retardants, anti-fogging agents, ultraviolet absorbers, thermal stabilizers, pigments, colorants, odor control agents, and the like.

It will be appreciated that alternative materials can be used to form either of the absorbing layers 12, 16 and the barrier layer 14. Some examples are set forth below.

Figure 2 shows a cross-sectional view of an alternate embodiment of the present invention. In this embodiment, the barrier layer 14 comprises a foam skin. Preferably the barrier layer 14 comprises the skin of a self-skinning polyurethane foam that is included in at least one of the absorbing layers 12, 16. It will be appreciated that the skin may be formed on both of the absorbing layers 12, 16 and positioned adjacent one another to form the barrier layer 14. As shown, the skinned portion of the absorbing layer 12, 16 is positioned such that it is between the two absorbing layers 12, 16.

Figure 3 shows a cross-sectional view of an alternate embodiment of the present invention. In this embodiment, the barrier layer 14 comprises a high density foam layer. The high density foam barrier layer 14 is nonporous. The first and second absorbing layers 12, 16 are as set forth above in connection with the Figure 1 embodiment

Figure 4 is an alternate embodiment of the present invention. In the Figure 4 embodiment, the system 10 comprises a gradient foam. As shown, the gradient foam includes two low density and porous absorbing layers 12, 16 at the exterior surfaces. The density of the foam increases from the exterior of the absorbing layers 12, 16 inwardly. Located at the center of the gradient foam is a relatively higher density, nonporous barrier layer 14, which may or may not be a discrete component of the system 10.

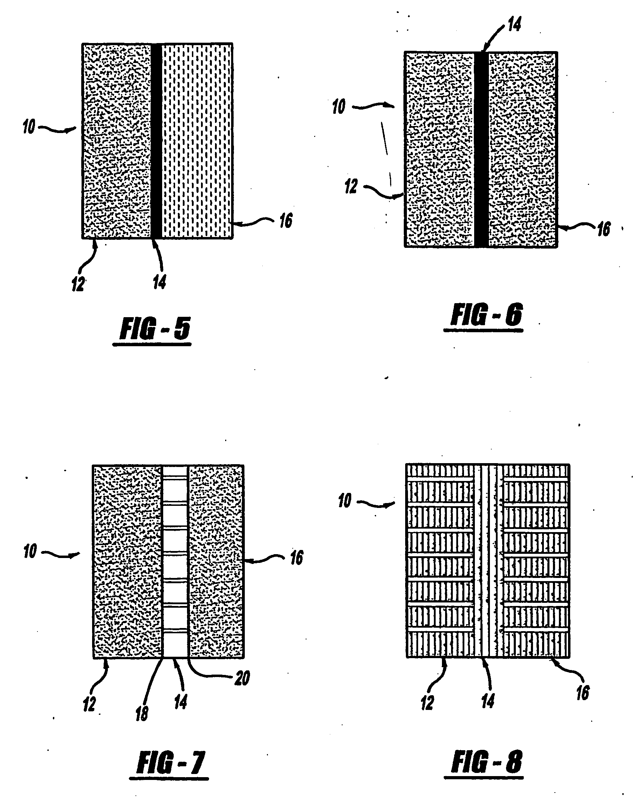

Figure 5 is an alternate embodiment of the present invention. In the Figure 5 embodiment, the second absorbing layer 16 comprises a fibrous material, including but not limited to natural and/or synthetic fibers. These fibers may be oriented, non-oriented, or a combination thereof. In addition, the fibrous material may include a woven or non-woven scrim layer. One such polymer fiber is sold by Owens Coming (Toledo, Ohio) under the trade name VERSAMAT. The first absorbing layer 12 comprises a viscoelastic foam. It will be appreciated, however, that either one or both of the absorbing layers 12, 16 may comprise a fibrous layer. Additionally, the fibrous layer composition may include organic and/or inorganic fillers. Furthermore, additional additives may be incorporated into the fibrous layer composition, such as but not limited to flame retardants, anti-fogging agents, resins, ultraviolet absorbers, thermal stabilizers, pigments, colorants, odor control agents, and the like.

Figure 6 is an alternate embodiment of the present invention. Figure 6 includes first and second absorber layers 12, 16 as set forth in connection with the Figure 1 embodiment The barrier layer 14 preferably comprises a closed cell foam with large cell sizes. Such a closed cell foam is sold by Dow Chemical (Midland, Michigan) under the trade name QUASH. The use of the large cell foam provides a barrier to limit noise transmission.

Figure 7 is an alternate embodiment of the present invention. The Figure 7 embodiment includes foam absorbing layers 12, 16. The barrier layer 14 preferably comprises a honeycomb layer. More specifically, the barrier layer 14 comprises a polymeric and/or metallic honeycomb sheet that opens in the direction of the noise transmission. That is, the open ends of the honeycomb are adjacent the absorbing layers 12, 16. In this embodiment, it is preferred that the absorbing layers 12, 16 each comprise skinned foam. The skinned portion 18, 20 of the foam is positioned adjacent the openings in the honeycomb such that the skin 18, 20 closes the open ends of the honeycomb to provide the barrier layer 14. While the skin 18, 20 is shown on each absorbing layer 12, 16, it will be appreciated that the skin need only be located on one of the absorbing layers 12, 16. The skinned foam may be replaced with an open cell foam or fibrous absorbing layer and an adjacent film or coating layer.

Figure 8 is an alternate embodiment of the present invention. In the Figure 8 embodiment, extruded polymeric material, such as polypropylene is used to form the system 10. Extruded polypropylene acts as a barrier layer, reducing noise transmission in the direction of the extrusion. More specifically, extruded polypropylene includes a series of extruded openings that extend perpendicular to the direction of noise transmission. In order to create the absorbing layers 12, 16, the extruded polypropylene is perforated in a direction parallel to the direction of noise transmission. These perforations allow noise to be absorbed and dissipated in the absorbing layers 12, 16 while providing a barrier layer 14 in the area where no perforations are present.

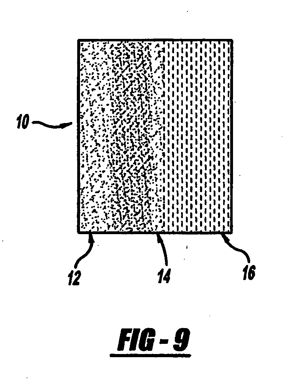

Figure 9 is an alternate embodiment of the present invention. In the Figure 9 embodiment, the first absorbing layer 12 comprises relatively lower density latex foam. The barrier layer 14 comprises high density latex foam. The second absorbing layer 16 comprises a woven material.

As indicated in the previously described embodiments, the first and second absorbing layers 12, 16 can comprise several different materials. It is preferred that the materials exhibit enhanced sound absorption and transmission loss properties. Further, it is preferred that the materials have vibration damping performance properties. Thus, the absorbing layers 12, 16 dissipate the noise and minimize panel vibration. Preferred are materials that have a damping performance, tan delta, of between about 0.01 and about 1.5. Still more preferred are materials that have a tan delta between about 0.3 and about 1.5. This damping performance helps eliminate noise due to vibration of the substrate.

Preferred materials that meet these criteria include natural or synthetic fibrous materials, such as, for example, wool, cotton, polyester, polyolefins and glass. Other preferred materials include natural or synthetic foams, both slab and molded, such as, for example, latex, polystyrene, polyurethane, polyolefin or polyester. Viscoelastic foams are most preferred. These foams could also be recycled foam, fiber composite, foam impregnated fiber mats or microcellular elastic foam. The materials may also include organic and/or inorganic fillers.

The thickness of the absorbing layers 12, 16 can vary depending on the particular application. By way of a non-limiting example, the thickness of the absorbing layers 12, 16 can be non-uniform. It is preferred that the thickness of the absorbing layer 12, 16 be between 0 mm and 50 mm.

Further, in each example shown above, a single material is used to make each absorbing layer 12, 16. It is to be understood that the absorbing layers 12, 16 may also comprise combinations of materials adjacent one another. That is, each absorbing layer 12, 16 may comprise more than one sublayer of either a similar or dissimilar material. Furthermore, blends of material may be used as the absorbing layer 12, 16. Additional, it will be appreciated that the first absorbing layer 12 and second absorbing layer 16 may comprise the same material or may be made of different materials.

By utilizing either an absorbing layer 12, 16 made of a single material or by using a multi-sublayer assembly as the absorbing layer 12, 16 having varying thickness, the system 10 can be tuned or adjusted to meet the specific noise reduction and absorption requirements for any particular location in the vehicle. This flexibility to adjust the system 10 allows for it to be used in various applications. This type of system also allows suppression of noise created by the engine, drive train or other vehicle components as well as suppression of vibration or damping of various vehicle components.

The barrier layer 14, as stated above, is preferably substantially impermeable and reduces the noise passing therethrough. Optionally, the barrier layer 14 can provide enhanced stiffness and shape retention. The barrier layer thus utilizes the blocking technique to reduce noise transmission therethrough. As with the absorbing layers 12, 16, the barrier layer 14 can have varying thickness. It is preferred that the thickness of the barrier layer be between 0.1 and 50 mm. Again, it is to be understood that the thickness can be varied, even outside the preferred range, in order to tune or adjust the system 10 to meet the specific noise reduction requirements for a particular location within the vehicle.

The barrier layer 14 has a surface weight of about $0.1 kg/m^2$ or greater. It is preferred that the barrier layer 14 have a surface weight greater than $0.4 kg/m^2$. Generally, the greater surface weight of the barrier layer results in better noise reduction capabilities of the sound insulating system. The surface weight of the barrier layer 14 is calculated by multiplying the density of the barrier layer by the thickness of the barrier layer.

It is preferred that the sound insulating system has a bending stiffness from about .18 N/mm to about 45 N/mm. The bending stiffness is measured by using a sample that is 2 inches x 4.5 inches simply supported with a span of 3 inches in accordance with ASTM test procedure D-5934-02. The bending stiffness aids in installation of the system, particularly into a vehicle.

Examples of flexural stiffness of various samples are set forth below:

| First Absorbing Layer (12) | Barrier Layer (14) | Second Absorbing Layer (16) | Flexural Stiffness (N/mm) |
|---|---|---|---|
| | | | |
| 12 mm viscoelastic foam | 0.5 mm PET | 10 mm 85g shoddy | 0.18 |
| 24 mm viscoelastic foam | 0.75 mm PET | 12 mm 110g shoddy | 0.51 |
| 24 mm viscoelastic foam | 2.0 mm PET | 12 mm 110g shoddy | 6.34 |
| 24 mm viscoelastic foam | 4.5 mm PET | 12 mm 110g shoddy | 45.41 |

The shoddy material used in each example comprises recycled polyester fibers. The shoddy material is available from Janesville Products of Ohio. Further, the thickness of each absorbing layer 12, 16 are shown. The density of the shoddy is also given. In the first sample, the shoddy density is $85 \ g/m^3$. In each of the other samples the shoddy density $110 \ g/m^3$.

While a single barrier layer 14 is shown, it is to be understood that multiple barrier layers 14 of varying thickness may be used. Thus, each barrier layer 14 may comprise more than one sublayer of either a similar or dissimilar material. Each layer may be of the same or different material. Additionally, blends of different materials may be used. Additionally, the barrier layer may have varying thickness.

Preferred materials for the barrier layer 14 include polymer film or sheet, closed cell foam, metal film, and skinned foam. As set forth above, the barrier layer 14 can comprise olefins, PET, PVC or any other suitable material. When the barrier layer comprises a skinned foam, the skin can be the skin of a material used to form the absorbing layer 12, 16. Further, the barrier layer 14 may include recycled polymer products. The barrier layer 14 may also include natural or synthetic fibers to add strength. The barrier layer 14 can also comprise a honeycomb structure or a mesh having substantially impermeable material, such as skins, films or sheets added to one or both sides of the honeycomb or mesh.

The barrier layer 14 is preferably shape formable and retainable in order to conform the shape of the system 10 to the substrate for any application. In order to combine the absorbing layers 12, 16 with the barrier layer 14, any suitable fabrication technique may be used. Some such examples include connecting the various layers by heat laminating, or by applying adhesives between the various layers. Such adhesives may be heat activated. The various layers may also be adhered during the process of shape forming by heating the layers and then applying pressure in the forming tool, or by applying adhesive to the layers and then applying pressure in the forming tool.

The barrier layer 14 can also be a stand alone sheet layer, or it could be applied directly to the absorbing layer by spray application of a material, such as, for example, polyurethane. The barrier layer may also be formed as a skin on the absorbing layer such as polyurethane or latex foam during the foaming process.

The system could also be constructed in a cast foam tool by inserting the barrier layer material, such as a polymer film into the center section of a mold and then injecting material to make the foam, such as polyurethane foam into both sides of the tool. The system 10 can also be formed by creating each of the absorbing layers 12, 16 and barrier layers 14 jointly and/or independently and then securing them by conventional methods, for example, using mechanical fasteners, heat fusing, sonic fusing, and/or adhesives.

Further, as set fotth above, the absorbing layers need not necessarily have a uniform thickness over the entire part. For example, the absorbing layers may be compacted in certain areas during the forming process. Additionally, it may be necessary to have different thicknesses of absorbing layers to fit in different areas of the vehicle. That is, there may be different clearances in the vehicle that require thinner absorbing layers in those areas. This by designing a variable thickness, the need to cut holes in the system is reduced. This allows maximum coverage area by the system, resulting in an increase in the overall noise reduction of the system.

As shown above each embodiment comprises a first absorbing layer 12 adjacent a barrier layer 14. A second absorbing layer 16 is adjacent the barrier layer 14 on the opposite side of the first absorbing layer. This system allows for sound absorption to take place on either side of the barrier layer, as well as noise transmission suppression into the vehicle. Further, the use of the barrier layer in connection with the absorbing layers also aids in noise suppression in either direction through the system.

The system 10 can also be made by first producing the first absorbing layer 12 and barrier layer 14. The second absorbing layer 16 can then be added.

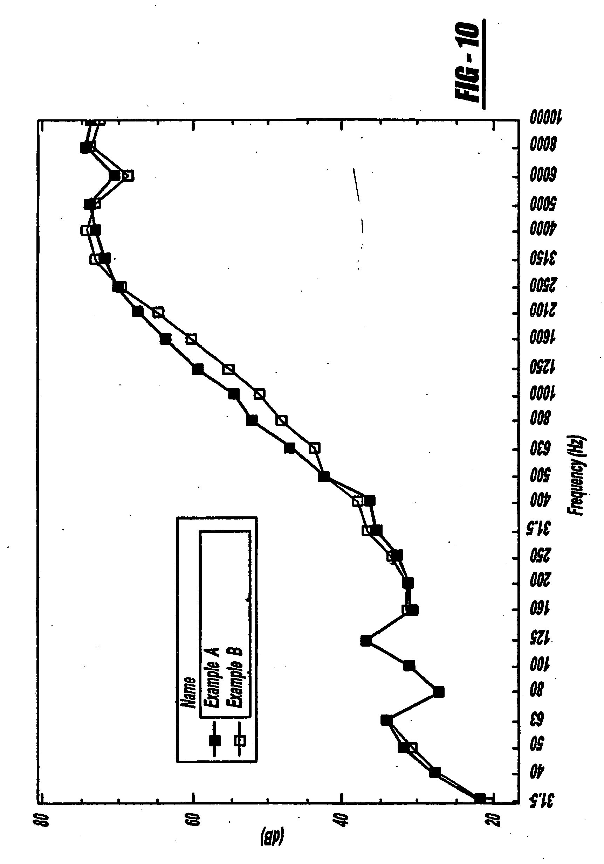

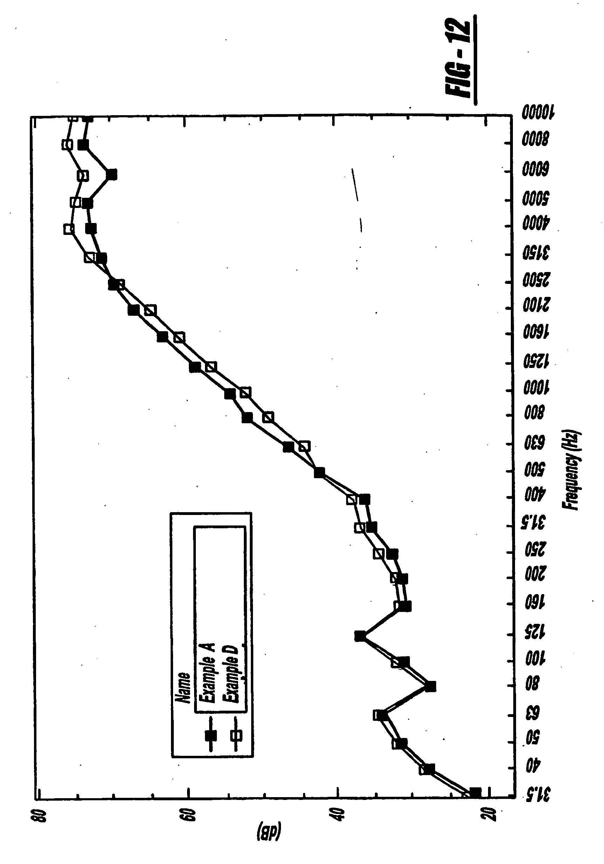

Four examples using various absorber layers and barrier layers were made and tested as set forth below. The test results from these four samples are shown in Figures 10-14 and described more fully below. Further two comparative dashmat systems were tested. The systems include the Rieter ULTRALIGHT dash insulator and the Lear SONOTEC dash insulator.

Example A. The absorber-barrier-absorber dash insulator or system 10 was made using viscoelastic foams as the absorbing layers 12, 16 and polyethylene sheet as the barrier layer 14.

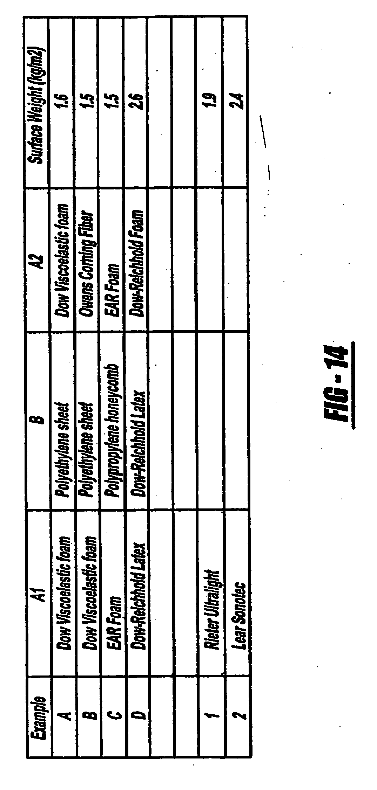

Three-layer samples with dimensions 0.69 m X 0.69 m X 27 mm thick were made using 2 layers of Dow Developmental viscoelastic polyurethane foam #76-16-10-HW with a thickness of 13 mm, and a 0.36 mm thick polyethylene sheet as the middle barrier layer. The areal density of the sample was calculated by measuring the mass of the sample and dividing by the area of the sample. The areal density is shown in Figure 14. The sample was placed over a 0.8 mm thick steel plate, and the assembly was inserted into the wall between the reverberation chamber and the semi-anechoic chamber. Noise was generated in the reverberation room using a speaker, and the sound pressure level was measured using four microphones placed at a distance of 1.17 m from the steel plate. An array of twelve microphones was placed in the semi-anechoic chamber at a distance of 0.76 m from the outer foam side of the sample. Noise reduction was calculated using Equation 1, in accordance with the general protocol of SAE J1400. The result of the noise reduction test is shown in Figure 10.

Equation 1. $\qquad NR = (\text{average } SPL_1) - (\text{average } SPL_2)$

Where: $SPL_2$ = Anechoic Sound Pressure level (dB)

$SPL_1$ = Reverberation Sound Pressure Level (dB)

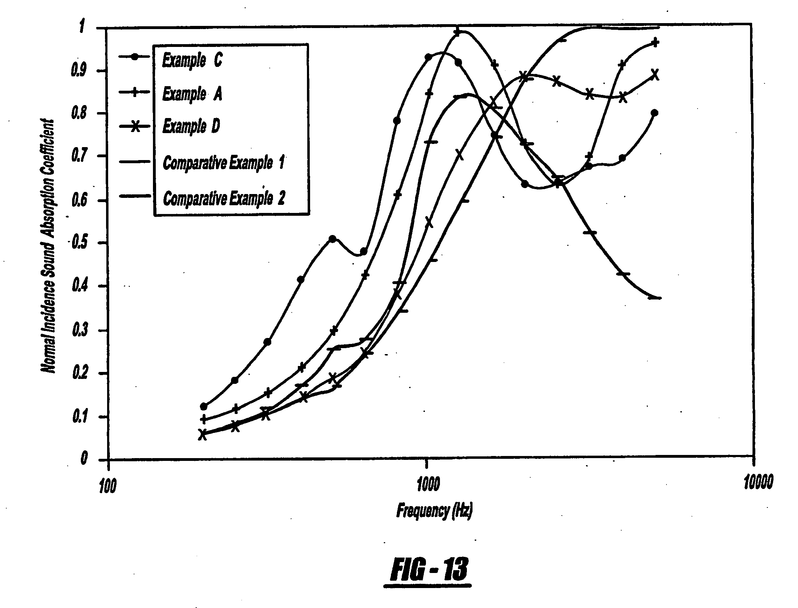

The normal incidence sound absorption coefficient of the sample was measured by cutting a 29 mm diameter disk from the 3-layer sample and inserting into a Bruel and Kjaer (Denmark) two-microphone Impedance Tube. The Impedance Tube test method is described in ASTM E-1050. The absorption coefficient results are shown in Figure 13.

The absorption coefficient of the viscoelastic foam was also measured using the Impedance Tube method. In addition, the damping loss factor of the foam was measured using compression testing and the hysteresis loop method. The viscoelastic foam showed a damping factor of 1.6.

Example B. The absorber-barrier-absorber dash insulator or system 10 was made with viscoelastic foam as the first absorbing layer 12 against the sheet metal, 0.36 mm polyethylene sheet as the barrier layer 14 and a polymer fiber mat as the second absorber layer 16.

Three-layer samples with dimensions 0.69 m X 0.69 m X 32 mm thick were made using 1 layer of Dow Developmental viscoelastic foam #76-16-10-HW with a thickness of 13 mm, one layer of Owens Coming VERSAMAT (Sample 506R4800) fiber material with a thickness of 18 mm, and a 0.4 mm thick polyethylene sheet as the barrier layer 14. The areal density of the sample was calculated by measuring the mass of the sample and dividing by the area of the sample. The areal density is shown in Figure 14. The noise reduction was measured using the method described in Example A with the viscoelastic foam against the steel plate. The results are shown in Figure 10.

The normal incidence sound absorption of this sample was measured using Impedance Tube method of Example A.

Example C. The absorber-barrier-absorber dash insulator or system 10 was made using skinned, open cell polyurethane foam Grade ES-50 from E-A-R Specialty Composites (Indianapolis, Indiana) as the absorbing layers 12, 16 and a polypropylene honeycomb sheet from Plascore (Zeeland, Michigan) as the barrier layer 14.

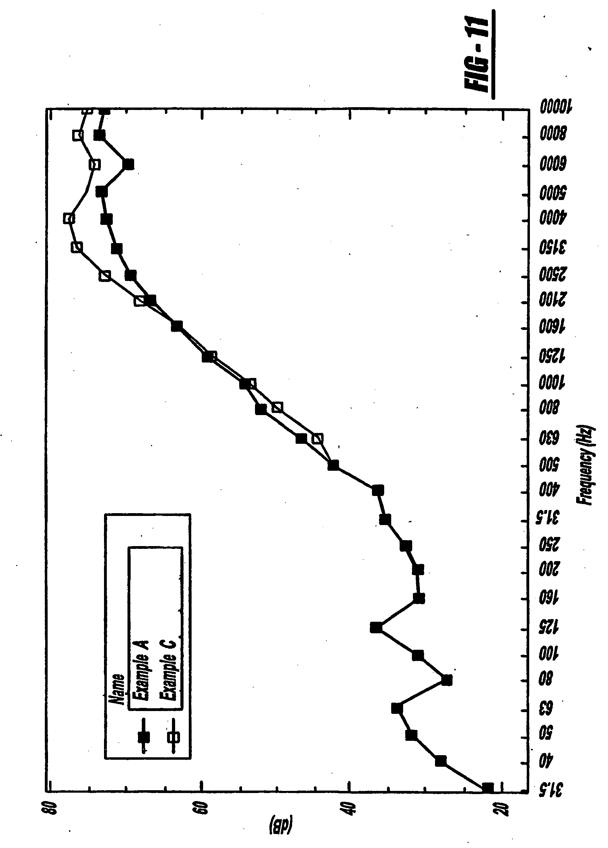

Three-layer samples with dimensions 0.69 m X 0.69 m X 30 mm thick were made using two layers 12, 16 of E-A-R foam, each 12.5 mm thick, with a 7.5 mm thick polypropylene honeycomb material, Plascore PCTR250WO.250, in the middle as the barrier layer 14. The surface skin on the E-A-R foam sheets, in contact with the honeycomb, for the barrier layer 14 for this construction. This example utilizes a structural air gap that includes a barrier to give a very lightweight, yet strong and formable barrier layer for the system 10. The areal density is shown in Figure 14. The noise reduction was measured using the method described in Example A, with the E-A-R foam against the steel plate. The results are shown in Figure 11.

The normal incidence sound absorption of this sample was measured using the Impedance Tube method of Example A, and the results are shown in Figure 13.

**Example D.** The absorber-barrier-absorber dash insulator or system 10 was made using a low density latex as the first absorbing layer 12 and a higher density latex foam as the barrier layer 14 that is deposited on a woven substrate which comprises the second absorbing layer 16.

Three layer samples with measurements 0.61 m X 0.61 m X 22 mm thick were provided by Dow-Reichhold (North Carolina). The thickness of the fiber layer was 11 mm, the thickness of the middle latex foam was 3 mm and the thickness of the outer latex foam was 8 mm. The samples were cut and glued together to make a 0.69 m X 0.69 m X 22 mm plaque for measuring noise reduction. The areal density is shown in Figure 14. The sample was placed over a 0.8 mm steel plate with the foam side adjacent to the steel, and noise reduction was measured as described in Example A. The results are shown in Figure 13.

**Comparative Example 1: Reiter ULTRALIGHT dash Insulator. A** Reiter ULTRALIGHT dash insulator for the 2003 DCX RS Minivan was cut into sections and glued together (areal density was adjusted for the glue mass) to make a 0.69 m X 0.69 m X 22 mm sample for measuring noise reduction. The sample was attached to a 0.8 mm steel plate and tested for noise reduction as described in Example A. The sound absorption coefficient results are shown in Figure 13. The areal density is shown in Figure 14.

**Lear SONOTEC dash insulator.** A Lear SONOTEC dash insulator for a 2003 Ford U-222 vehicle was cut into sections and glued together (areal density was adjusted for the glue mass) to make a 0.69 m X 0.69 m X 25 mm sample for measuring noise reduction. The sample was attached to a 0.8 mm steel plate and tested for noise reduction as described in Example A. The sound absorption coefficient results are shown in Figure 13. The areal density is shown in Figure 14.

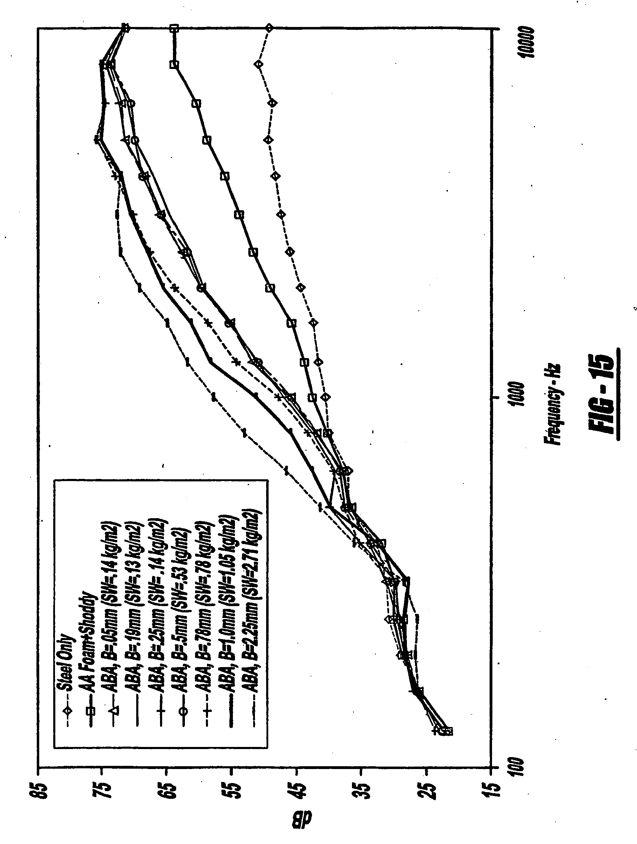

Additional tests were performed on systems 10 having varying configurations. Figure 15 shows the noise reduction of various samples. The noise reduction was determined in the same manner as set forth above. sound absorption coefficient results are shown in Figure 13. The areal density is shown in Figure 14.

Additional tests were performed on systems 10 having varying configurations. Figure 15 shows the noise reduction of various samples. The noise reduction was determined in the same manner as set forth above.

In Figure 15 A refers to absorbing layers, either 12 or 16. For each A layer 12 a viscoelastic foam was used. The specific viscoelastic foam used was FOAMEX H300-10N, 3 pcf ($lb/ft^3$). For each A layer 16 a shoddy material was used. The specific shoddy material comprises recycled polyester fibers available from Janesville Products of Ohio.

**EP 1 682 385 B1**

B refers to the barrier layer 14. In the various samples, the B layer comprises different materials. In the B layers where the thickness is shown to be .05 mm, .19mm and .25 mm, the B layers comprise PVA. The B layer where the thickness is shown to be .5 mm, .78 mm and 1.0 mm comprise HIPS. The B layer where the thickness is shown to be 2.25 mm comprises TPO. As shown in the legend on Figure 15, the thickness of the B layers in the samples ranges between 0.5 mm and 2.25 mm. Additionally, the surface weight of the B layers ranges between .14 kg/m$^2$ and 2.71 kg/m$^2$.

It is appreciated that an increase in the surface weight of the barrier layer 14 yields higher transmission loss and noise reduction. This results in lower noise levels in the interior of the vehicle.

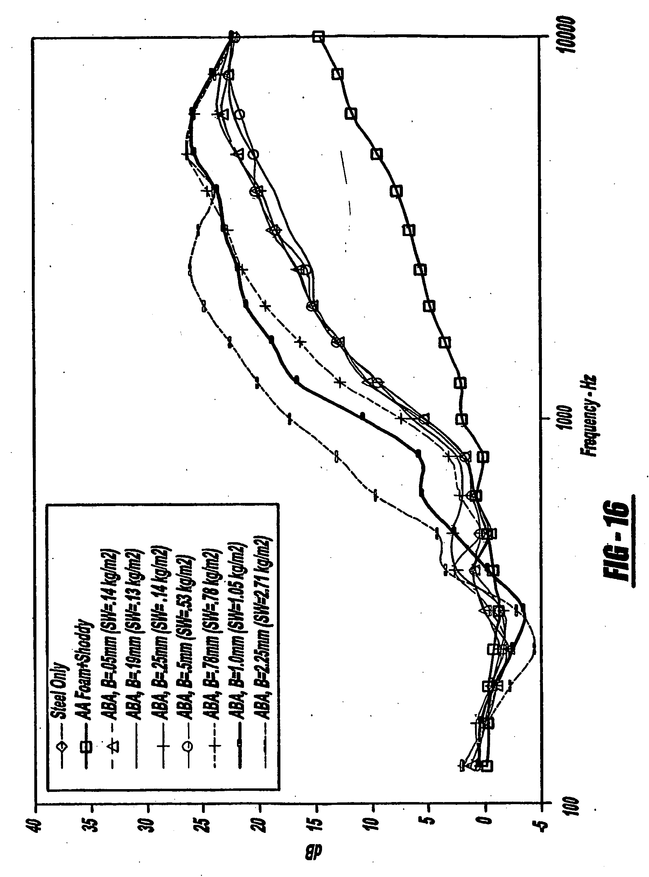

Figure 16 shows the insertion loss for the same samples shown in Figure 15. The insertion loss is a computed quantity. It is computed by taking the noise reduction for the system and subtracting the noise reduction of the steel only.

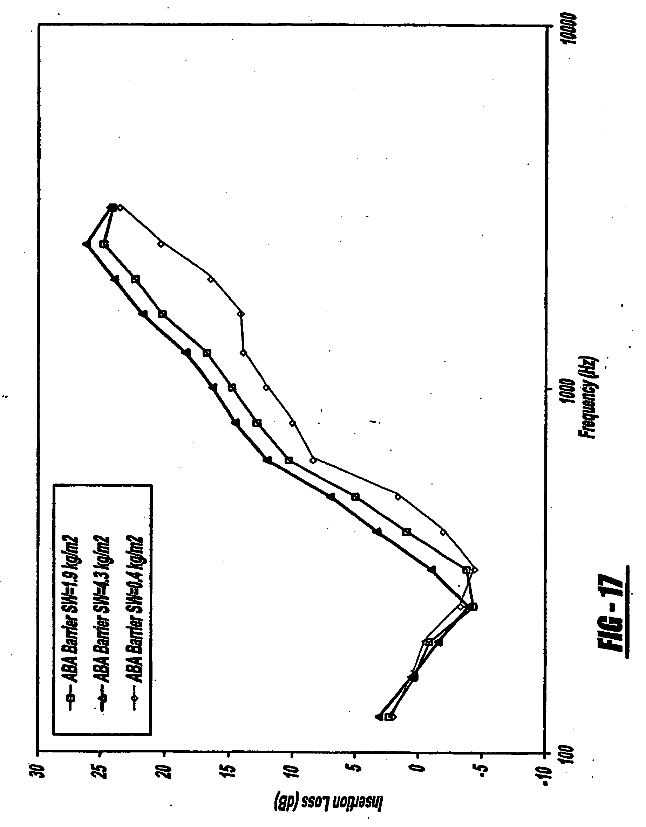

Figure 17 shows the insertion loss for another set of samples. As with the samples in accordance with Figures 15 and 16, the A layers comprise viscoelastic foam and shoddy. In the samples of Figure 17, the barrier or B layer comprises PET. As can be seen, a double wall resonance frequency shift occurs. Similarly, Figure 17 indicates an increase in insertion loss with an increase in surface weight of the B layer. barrier layer to reduce vibration of said barrier layer. In this manner, the absorbing layer also acts as a vibration damping layer. This may result in an increase in transmission loss of the system 10. Further viscoelastic foams have good sound absorption properties due to the foam's cell structure and viscoelasticity. When using a viscoelastic foam as an absorbing or A layer, it is preferred that the foam have a Young Modulus of less than 7.0e+5 Pa and damping greater than 0.3. It will be appreciated that the viscoelastic foam layer is adapted to be placed against a substrate, such as the component of the vehicle.

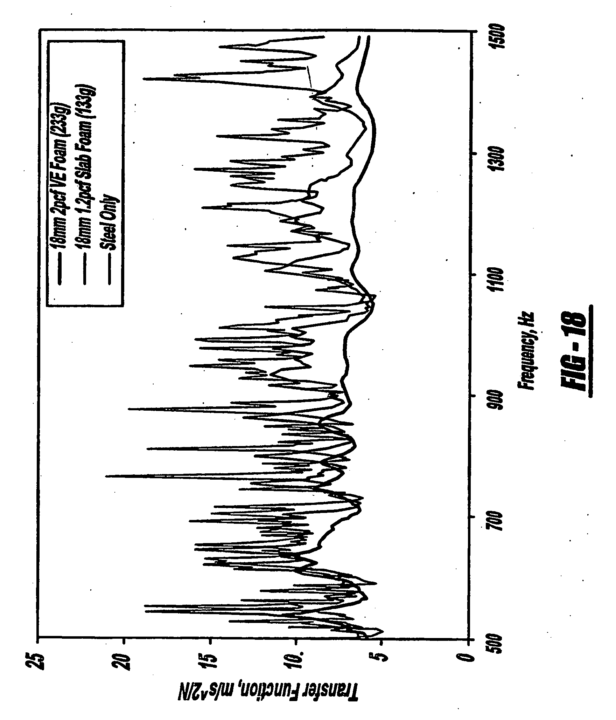

Figure 18 shows a damping comparison of various samples of foam of equal thickness. The first foam listed in the legend is a viscoelastic foam as set froth above but is 2 pcf foam. The second foam listed is a slab foam that is 1.2 pcf. The weight of the foam sample is also shown. The slab foam used comprises Melamine. The damping test was performed in a manner known in the art. The sample was excited with vibration. The transfer function is calculated by dividing the acceleration of the plate with the force applied. In this manner, the effect of the force magnitude on the results is eliminated. As can be seen in Figure 18, the viscoelastic foam results in higher damping. Thus, when used in a system 10 as the A or absorbing layer, the viscoelastic foam reduces the vibration motion of the barrier layer through damping. This can increase the transmission loss of the overall system.

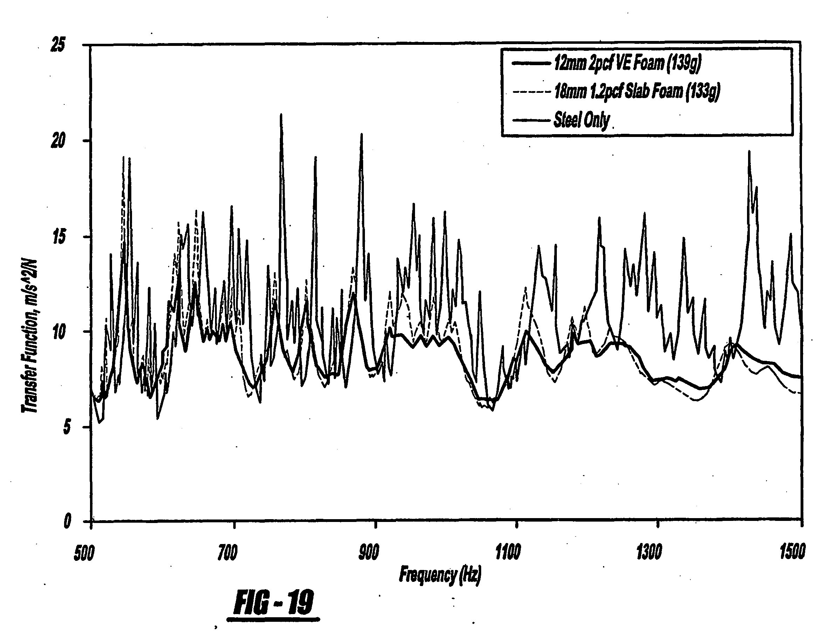

Figure 19 shows a damping comparison of samples having equal mass. The test was performed in the same manner as set forth above in connection with Figure 18.

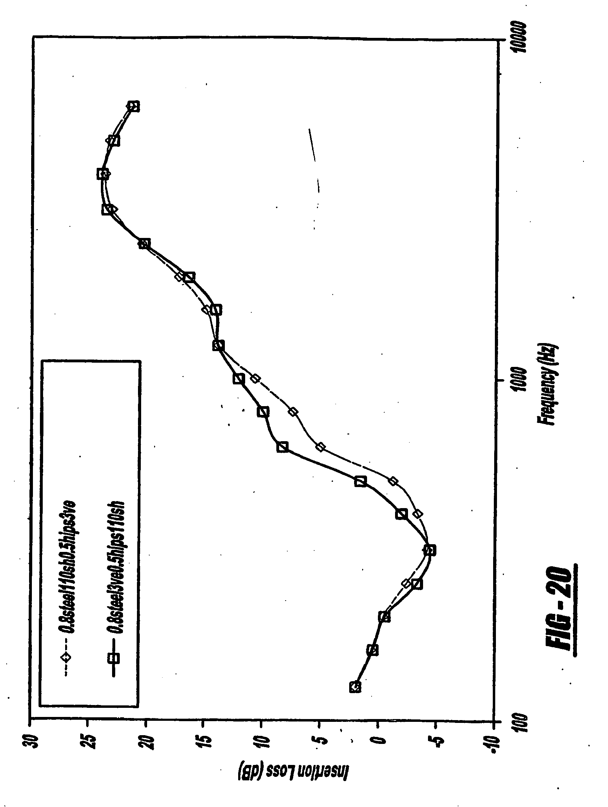

Figure 20 shows the effect on insertion loss by placing the viscoelastic A layer against the steel. More specifically, one sample of a system 10 was prepared. The sample consisted of a viscoelastic foam absorbing layer 12, a HIPS barrier layer 14 and a shoddy absorbing layer 12. The tests were performed by first placing the shoddy absorber layer adjacent the steel and determining the insertion loss in the same manner as set forth above. Subsequently, the same sample was tested by placing the viscoelastic absorber layer against the steel and determining the insertion loss. The results are shown in Figure 20. As can be seen, an increase in insertion loss is achieved when the viscoelastic foam is place against the steel. Thus, it is preferred that the viscoelastic foam layer be placed against the substrate, such as the vehicle component when the system 10 is installed.

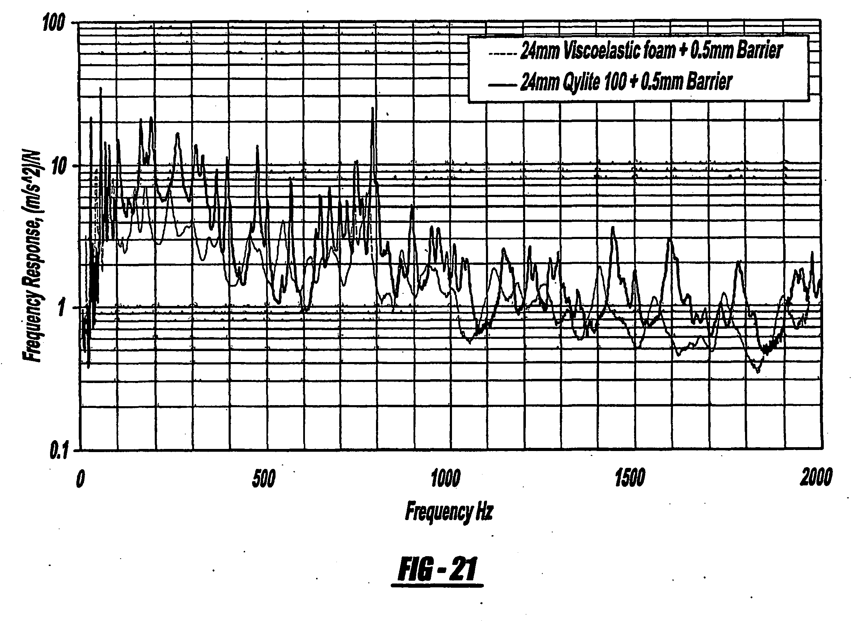

Figure 21 shows the effect of the damping of the viscoelastic foam on the barrier layer. In order to test the effect of damping by a viscoelastic absorbing layer on the barrier, two samples were tested. The samples each consisted of only one absorbing layer and one barrier layer. In each case the absorbing layer was a viscoelastic foam. In the first sample, the viscoelastic foam is the FOAMEX foam identified above. In the second sample, the viscoelastic foam comprises Qylite, also available from FOAMEX. The barrier layer in each case was HIPS. Only one absorbing layer was used so that there was access to the barrier layer. Access to the barrier layer is needed in order to determine the vibration of the barrier layer itself. Frequency response as shown in Figure 21 means the same thing as the transfer function as shown in Figure 18. The test to determine the frequency response was the same as set forth above in connection with Figure 18. As can be seen from the results shown in Figure 21, a viscoelastic foam absorber layer reduces the motion or vibration of the barrier layer. This results in less noise being transmitted to the interior of the vehicle.

The system 10 as set forth above can absorb and block noise in either direction. This is advantageous in that the system 10 can be used and adjusted to meet many noise reduction requirements in a vehicle. It will also be appreciated that, while particularly well suited for automotive applications, the system 10 can also be used in other applications. Such other applications include construction, industrial, appliance, aerospace, truck/bus/rail, entertainment, marine and military applications.

It will be appreciated that the invention has been described in an illustrative manner. The terminology which has been used is intended to be in the nature of words of description rather than of limitation. Obviously, many modification and variations are apparent within the scope of the claims. It is, therefore, to be understood that the invention set forth in the claims may be practiced other than as specifically described.

**Claims**

1. A sound insulating system (10) comprising:

a first sound absorbing layer (12) having a thickness of between 0 and 100mm;
a substantially impermeable barrier layer adjacent said first absorbing layer (14), the barrier layer having a thickness between 0.1 and 50mm; and
a second sound absorbing layer adjacent said barrier layer (16), the second sound absorbing layer having a thickness of between 0 and 100mm,

wherein the first absorbing layer comprises foam or a fibrous layer, the second absorbing layer comprises foam or a fibrous layer and the barrier layer comprises a sheet of acrylonitrile-butadiene-styrene, high impact polystyrene, polyethylene terephthalate, polyethylene, polypropylene, ethylene vinyl acetate, polyvinyl acetate, polyvinyl chloride or an olefin, wherein the surface weight of said barrier layer is greater than 0. 1kg/m$^2$ and wherein the bending stiffness of said system is between from 0.18N/mm to 45 N/mm.

2. A sound insulating system as set forth in claim 1 wherein the surface weight of said barrier layer is greater than 0.4kg/m$^2$.

3. A sound insulating system as set forth in claim 1 wherein the thickness of each of said first and said second absorbing layers is between 0 and 50mm.

4. A sound insulating system as set forth in any one of the preceding claims wherein at least one of said first and said second absorbing layers dampens vibrations to said barrier layer to reduce vibration of said barrier layer.

5. A sound insulating system as set forth in claim 4 wherein at least one of said first and said second absorbing layers comprises foam.

6. A sound insulating system as set forth in claim 5 wherein said foam comprises viscoelastic foam.

7. A sound insulating system as set forth in claim 6 wherein said foam has a Young Modulus of less than 7.0e+5 Pa.

8. A sound insulating system as set forth in any one of the preceding claims wherein said first absorbing layer comprises viscoelastic foam.

9. A sound insulating system as set forth in claim 8 wherein said first absorbing layer is adapted to be placed against a substrate.

10. A sound insulating system as set forth in claim 9 wherein said second absorbing layer comprises shoddy.

**Patentansprüche**

1. Schalldämpfungssystem (10), mit:

einer ersten schallabsorbierenden Schicht (12) mit einer Dicke zwischen 0 und 100 mm;
einer im Wesentlichen undurchlässigen Sperrschicht (14) angrenzend an die erste absorbierende Schicht, wobei die Sperrschicht eine Dicke zwischen 0,1 und 50 mm hat; und
einer zweiten schallabsorbierenden Schicht (16) angrenzend an die Sperrschicht, wobei die zweite schallabsorbierende Schicht eine Dicke zwischen 0 und 100 mm hat,

wobei die erste absorbierende Schicht Schaumstoff oder eine Faserschicht umfasst, die zweite absorbierende Schicht Schaumstoff oder eine Faserschicht umfasst und die Sperrschicht eine Folie aus Acrylnitril-Butadien-Styrol, hochschlagfestem Polystyrol, Polyethylenterephthalat, Polyethylen, Polypropylen, Ethylenvinylacetat, Polyvinylacetat, Polyvinylchlorid oder einem Olefin umfasst, wobei das Flächengewicht der Sperrschicht größer ist als 0,1 kg/m$^2$, und wobei die Biegesteifigkeit des Systems zwischen 0,18 N/mm und 45 N/mm beträgt.

2. Schalldämpfungssystem nach Anspruch 1, wobei das Flächengewicht der Sperrschicht größer ist als 0,4 kg/m$^2$.

**3.** Schalldämpfungssystem nach Anspruch 1, wobei die Dicke der ersten und der zweiten absorbierenden Schicht jeweils zwischen 0 und 50 mm beträgt.

**4.** Schalldämpfungssystem nach einem der vorhergehenden Ansprüche, wobei mindestens eine von der ersten und der zweiten absorbierenden Schicht auf die Sperrschicht wirkende Schwingungen dämpft, um die Schwingung der Sperrschicht zu reduzieren.

**5.** Schalldämpfungssystem nach Anspruch 4, wobei mindestens eine von der ersten und der zweiten absorbierenden Schicht Schaumstoff umfasst.

**6.** Schalldämpfungssystem nach Anspruch 5, wobei der Schaumstoff viskoelastischen Schaumstoff umfasst.

**7.** Schalldämpfungssystem nach Anspruch 6, wobei der Schaumstoff einen Young'schen Elastizitätsmodul kleiner als 7,0e+5Pa hat.

**8.** Schalldämpfungssystem nach einem der vorhergehenden Ansprüche, wobei die erste absorbierende Schicht viskoelastischen Schaumstoff umfasst.

**9.** Schalldämpfungssystem nach Anspruch 8, wobei die erste absorbierende Schicht an ein Substrat angelegt werden kann.

**10.** Schalldämpfungssystem nach Anspruch 9, wobei die zweite absorbierende Schicht Shoddywolle umfasst.

**Revendications**

**1.** Système d'isolation acoustique (10) comprenant :

une première couche d'absorption acoustique (12) ayant une épaisseur comprise entre 0 et 100 mm ;
une couche de barrage sensiblement imperméable adjacente à ladite première couche d'absorption (14), la couche de barrage ayant une épaisseur comprise entre 0,1 et 50 mm ; et
une deuxième couche d'absorption acoustique adjacente à ladite couche de barrage (16), la deuxième couche d'absorption acoustique ayant une épaisseur comprise entre 0 et 100 mm,

dans lequel la première couche d'absorption comprend une mousse ou une couche fibreuse, la deuxième couche d'absorption comprend une mousse ou une couche fibreuse et la couche de barrage comprend une feuille d'acrylonitrile-butadiène-styrène, de polystyrène choc, de téréphtalate de polyéthylène, de polyéthylène, de polypropylène, d'éthylène-acétate de vinyle, d'acétate de polyvinyle, de chlorure de polyvinyle ou d'un oléfine, dans lequel la masse surfacique de ladite couche de barrage est supérieure à 0,1 kg/m$^2$ et dans lequel la rigidité à la flexion dudit système est comprise entre 0,18 N/mm et 45 N/mm.

**2.** Système d'isolation acoustique selon la revendication 1, dans lequel la masse surfacique de ladite couche de barrage est supérieure à 0,4 kg/m$^2$.

**3.** Système d'isolation acoustique selon la revendication 1, dans lequel l'épaisseur de chaque couche parmi ladite première et ladite deuxième couche d'absorption est comprise entre 0 et 50 mm.

**4.** Système d'isolation acoustique selon l'une quelconque des revendications précédentes, dans lequel au moins une couche parmi ladite première et ladite deuxième couche d'absorption amortit les vibrations vers ladite couche de barrage afin de réduire les vibrations de ladite couche de barrage.

**5.** Système d'isolation acoustique selon la revendication 4, dans lequel au moins une couche parmi ladite première et de ladite deuxième couche d'absorption comprend une mousse.

**6.** Système d'isolation acoustique selon la revendication 5, dans lequel ladite mousse comprend une mousse viscoélastique.

**7.** Système d'isolation acoustique selon la revendication 6, dans lequel ladite mousse a un module de Young inférieur à 7,0e+5 Pa.

**8.** Système d'isolation acoustique selon l'une quelconque des revendications précédentes, dans lequel ladite première couche d'absorption comprend une mousse viscoélastique.

**9.** Système d'isolation acoustique selon la revendication 8, dans lequel ladite première couche d'absorption est adaptée à être disposée contre un substrat.

**10.** Système d'isolation acoustique selon la revendication 9, dans lequel ladite deuxième couche d'absorption comprend du déchet de laine.

**FIG - 1**

**FIG - 2**

**FIG - 3**

**FIG - 4**

FIG - 5

FIG - 6

FIG - 7

FIG - 8

**_FIG - 9_**

FIG - 10

FIG - 11

FIG - 12

**_FIG - 13_**

EP 1 682 385 B1

| Example | A1 | B | A2 | Surface Weight (kg/m2) |
|---|---|---|---|---|
| A | Dow Viscoelastic foam | Polyethylene sheet | Dow Viscoelastic foam | 1.6 |
| B | Dow Viscoelastic foam | Polyethylene sheet | Owens Corning Fiber | 1.5 |
| C | EAR Foam | Polypropylene honeycomb | EAR Foam | 1.5 |
| D | Dow-Reichhold Latex | Dow-Reichhold Latex | Dow-Reichhold Foam | 2.6 |
|  |  |  |  |  |
| 1 | Rieter Ultralight |  |  | 1.9 |
| 2 | Lear Sonotec |  |  | 2.4 |

**FIG - 14**

19

FIG - 15

**FIG - 16**

Legend:
- Steel Only
- AA Foam+Shoddy
- ABA, B=.05mm (SW=.14 kg/m2)
- ABA, B=.19mm (SW=.13 kg/m2)
- ABA, B=.25mm (SW=.14 kg/m2)
- ABA, B=.5mm (SW=.53 kg/m2)
- ABA, B=.78mm (SW=.78 kg/m2)
- ABA, B=1.0mm (SW=1.05 kg/m2)
- ABA, B=2.25mm (SW=2.71 kg/m2)

Y-axis: dB
X-axis: Frequency - Hz

21

FIG - 17

Legend:
- ABA Barrier SW=1.9 kg/m2
- ABA Barrier SW=4.3 kg/m2
- ABA Barrier SW=0.4 kg/m2

X-axis: Frequency (Hz)
Y-axis: Insertion Loss (dB)

FIG - 18

**FIG - 19**

EP 1 682 385 B1

**FIG - 20**

**FIG - 21**

EP 1 682 385 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 51653903 P
- US 6145617 A
- US 6296075 B, Gish
- JP 2000209070 A
- JP 2000209059 A
- EP 1428656 A1